# EUROPÄISCHE PATENTSCHRIFT

(11) **EP 3 266 631 B1**
(45) Veröffentlichungstag und Bekanntmachung des Hinweises auf die Patenterteilung: **27.03.2019**
(21) Anmeldenummer: 17175560.6
(22) Anmeldetag: 12.06.2017
(51) Int. Cl.: B60J 1/20

(54) **BESCHATTUNGSVORRICHTUNG FÜR EINE SCHEIBE EINES KRAFTFAHRZEUGS**
SHADING DEVICE FOR A PANE OF A MOTOR VEHICLE
DISPOSITIF D'OMBRAGE POUR UNE VITRE DE VÉHICULE AUTOMOBILE

(30) Priorität: 04.07.2016 DE 102016212166
(43) Veröffentlichungstag der Anmeldung: 10.01.2018
(73) Patentinhaber: BOS GmbH & Co. KG, 73760 Ostfildern (DE)
(72) Erfinder: Bucur, Adrian, 73730 Esslingen (DE); Elleder, Dietmar, 70825 Korntal-Münchingen (DE); Jonas, Bernd, 71116 Rohrau (DE); Marzinke, Timo, 70374 Stuttgart (DE)
(74) Vertreter: Patentanwälte Ruff, Wilhelm, Beier, Dauster & Partner mbB

(56) Entgegenhaltungen:
- DE-A1-102013 006 761
- DE-U1-202007 015 602

## Beschreibung

Die Erfindung betrifft eine Beschattungsvorrichtung für eine Scheibe eines Kraftfahrzeugs mit einem flexiblen Beschattungsgebilde, das auf einer Wickelwelle auf- und abwickelbar gehalten ist, die in einem fahrzeugfesten Aufnahmebereich mit einem Durchtritt angeordnet ist, durch den hindurch das Beschattungsgebilde zwischen einer auf die Wickelwelle aufgewickelten Ruhestellung und einer die Scheibe überdeckenden Beschattungsstellung verlagerbar ist, wobei der Durchtritt durch ein schwenkbeweglich gelagertes Schließteil verschließbar oder freigebbar ist, sowie mit einem Antriebssystem, das zur Verlagerung des Beschattungsgebildes zwischen der Ruhestellung und der Beschattungsstellung vorgesehen ist, und mit einer Steuerkinematik zur Zwangssteuerung einer Öffnungs- oder Schließbewegung des Schließteils, die mit dem Antriebssystem gekoppelt ist.

Eine derartige Beschattungsvorrichtung ist aus der DE 10 2013 006 761 A1 bekannt. Die bekannte Beschattungsvorrichtung ist für eine Seitentür eines Personenkraftwagens vorgesehen und weist eine flexible Rollobahn auf, die auf einer Wickelwelle auf- und abwickelbar gehalten ist. Die Rollobahn ist an ihrem in Auszugrichtung vorderen Stirnendbereich mit einem Auszugprofil versehen, das in seitlichen Führungsschienen entlang der Seitenscheibe der Seitentür in Fahrzeughochrichtung verlagerbar ist. In einer Ruhestellung sind die Rollobahn und das Auszugprofil unterhalb einer Türbrüstung in einem Kassettengehäuse angeordnet, das nach oben mit einem Durchtritt versehen ist, um ein Ausfahren des Auszugprofils und des Beschattungsgebildes nach oben zu ermöglichen. Der Durchtritt ist durch ein schwenkbewegliches Schließteil verschließbar oder freigebbar. Das Schließteil ist mittels einer Steuerkinematik zwischen einer Schließstellung, einer Öffnungsstellung und einer Zwischenstellung zwangsgesteuert abhängig von einer Ein- oder Ausfahrbewegung des Auszugprofils. Wenn das Auszugprofil und das Beschattungsgebilde sich in ihrer Ruhestellung befinden, befindet sich das Schließteil in seiner Schließstellung. Zum Ausfahren des Auszugprofils und des Beschattungsgebildes aus der Ruhestellung in Richtung der Beschattungsstellung wird das Schließteil in seine Öffnungsstellung überführt. Nach Erreichen der Beschattungsstellung des Auszugprofils und der Rollobahn wird das Schließteil in eine Zwischenstellung zurückgeschwenkt, die einer teilweise geöffneten Stellung entspricht. Eine Verlagerung des Auszugprofils und der Rollobahn zwischen der Beschattungsstellung und der Ruhestellung erfolgt durch ein Antriebssystem, mit dem auch die Steuerkinematik zur Verlagerung des Schließteils gekoppelt ist.

Aufgabe der Erfindung ist es, eine Beschattungsvorrichtung der eingangs genannten Art zu schaffen, die eine kompakte und funktionssichere Zwangssteuerung des Schließteils ermöglicht.

Diese Aufgabe wird dadurch gelöst, dass die Steuerkinematik eine Seilzuganordnung aufweist, die mit einer Seilsteuerrolle mit wenigstens einer zu einer Drehachse der Seilsteuerrolle exzentrischen Seilumlenkspur versehen ist. Je nach Drehstellung der Seilsteuerrolle ergeben sich somit unterschiedliche Seilzuglängen, die auf das Schließteil einwirken und demzufolge das Schließteil in einfacher Weise in die unterschiedlichen Schwenkstellungen verlagern. Die Drehbeweglichkeit der Seilsteuerrolle ermöglicht eine einfache Kopplung mit einem entsprechenden Antriebsglied des Antriebssystems. Die Seilzuganordnung weist in vorteilhafter Weise einen offenen Seilzug auf, dessen eines Ende an dem Schließteil angreift und dessen anderes Ende stationär, d.h. fahrzeugfest, gehalten ist. Die erfindungsgemäße Beschattungsvorrichtung ist in besonders vorteilhafter Weise für eine Seitenscheibe eines Personenkraftwagens, insbesondere eine Seitenscheibe einer Fondseitentür des Personenkraftwagens, einsetzbar. Das Antriebssystem weist vorzugsweise einen elektrischen Antriebsmotor auf, der über geeignete Getriebe und Antriebsübertragungsglieder eine Verlagerung des Beschattungsgebildes ermöglicht. In vorteilhafter Weise ist dem Beschattungsgebilde an seinem in Auszugrichtung vorderen Stirnendbereich ein formstabiles Auszugprofil zugeordnet. Das Antriebssystem ist derart ausgestaltet, dass es sowohl das Auszugprofil als auch die Wickelwelle antreibt. Als wenigstens eine Seilumlenkspur ist insbesondere eine Umfangsnut in der Seilsteuerrolle vorgesehen.

In Ausgestaltung der Erfindung ist die Seilsteuerrolle ein- oder mehrteilig ausgebildet. Falls mehr als eine Seilumlenkspur vorgesehen ist, können entsprechende Seilsteuerrollenteile, die jeweils eine Seilumlenkspur umfassen, auch insbesondere axial zu der Seilsteuerrolle miteinander verbunden werden. Im Bereich der wenigstens einen Seilumlenkspur ergibt sich jeweils ein maximaler Umschlingungswinkel des Seiles der Seilzuganordnung von 180°, wobei die Seilsteuerrolle sich gleichzeitig zu der im Wesentlichen stationären Umschlingung dreht und so die Veränderung der relativ zu dem Schließteil wirksamen Seillänge bewirkt.

In weiterer Ausgestaltung der Erfindung sind mehrere exzentrische Seilumlenkspuren vorgesehen, die in Umfangsrichtung der Seilsteuerrolle zueinander versetzt angeordnet sind, und die unterschiedliche radiale Abstände relativ zu der Drehachse der Seilsteuerrolle aufweisen. In vorteilhafter Weise sind die unterschiedlichen Seilumlenkspuren über einen Umfang der Seilsteuerrolle verteilt angeordnet und gehen wendelförmig über einen Umfang der Seilsteuerrolle fluchtend ineinander über. Die unterschiedlichen Seilumlenkspuren schließen demzufolge fluchtend in Umfangsrichtung aneinander an. Ein entsprechendes Seiltrum des Seilzugs, das im Bereich der Seilsteuerrolle umgelenkt wird, gleitet demzufolge von einer Seilumlenkspur in die nachfolgende, je nach Drehrichtung der Seilsteuerrolle. Maßgeblich für die erfindungsgemäße Lösung ist es, dass der Seilzug die Seilsteuerrolle nicht kraftschlüssig umschlingt, sondern dass die Seilsteuerrolle mit ihren Seilumlenkspuren vielmehr relativ zu dem umgelenkten Seiltrum bei ihrer Drehbewegung entlangleitet, wobei unterschiedliche Umlenklängen des Seiltrums lediglich durch die unterschiedlichen radialen Abstände der verschiedenen Seilumlenkspuren relativ zu der Drehachse der Seilsteuerrolle definiert werden. Dies bewirkt die sich ändernden Seillängen zwischen dem Angriff des Seilzugs am Schließteil und der Seilsteuerrolle, wodurch das Schließteil die gewünschten Schwenkbewegungen durchführt.

In weiterer Ausgestaltung der Erfindung weist die Seilzuganordnung eine Seilausgleichseinheit auf. Die Seilausgleichseinheit dient dazu, eine gleichmäßige Seilspannung der Seilzuganordnung aufrechtzuerhalten unabhängig davon, welche Länge des umgelenkten Seiltrums auf der jeweiligen Seilumlenkspur der Seilsteuerrolle aufliegt. Die Seilausgleichseinheit umfasst ein Umlenkelement für die Seilzuganordnung, das federbelastet beweglich angeordnet ist, um den unterschiedlichen Umschlingungslängen der umgelenkten Seiltrums nachgeführt werden zu können, und um eine gleichmäßige Seilspannung aufrechterhalten zu können. Als Umlenkelement kann ein Gleit- oder Rollelement vorgesehen sein.

In weiterer Ausgestaltung der Erfindung ist die Seilsteuerrolle durch ein Antriebsglied des Antriebssystems angetrieben. Vorzugsweise ist als Antriebsglied eine mit einem entsprechenden Getriebe des Antriebssystems gekoppelte Übertragungswelle vorgesehen, die direkt oder indirekt über einen Schneckentrieb oder Ähnliches mit der Seilsteuerrolle drehmomentübertragend gekoppelt ist.

In weiterer Ausgestaltung der Erfindung ist die Seilzuganordnung seitlich zu dem Schließteil angeordnet und greift an einem Seitenbereich des Schließteils an. Dies ermöglicht eine besonders einfache Gestaltung der Seilzuganordnung. Um ein Angreifen eines Seilendes eines offenen Seilzugs an dem Schließteil zu ermöglichen, ist das Schließteil in vorteilhafter Weise mit einem seitlich nach außen abragenden Hebelfortsatz versehen, der in radialem Abstand zu einer Schwenkachse des Schließteils einstückig am Schließteil angeformt oder am Schließteil befestigt ist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch einen Teilbereich einer Seitentür eines Personenkraftwagens mit einer fahrzeuginnenraumseitig angeordneten Ausführungsform einer erfindungsgemäßen Beschattungsvorrichtung,
- Fig. 2: schematisch einen Ausschnitt der Beschattungsvorrichtung nach Fig. 1 in einer Schließstellung eines Schließteils der Beschattungsvorrichtung,
- Fig. 3: schematisch den Teilbereich der Beschattungsvorrichtung nach Fig. 2 in einer Öffnungsstellung des Schließteils,
- Fig. 4: in einem Längsschnitt eine Seilsteuerrolle der Beschattungsvorrichtung nach den Fig. 2 und 3 und
- Fig. 5: in einer schematischen Frontansicht die Seilsteuerrolle nach Fig. 4 mit angedeuteten, unterschiedlichen Seilumlenkspuren.

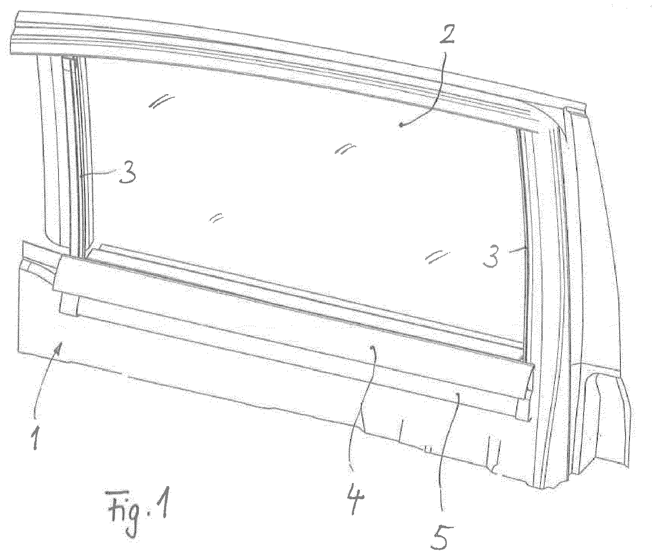

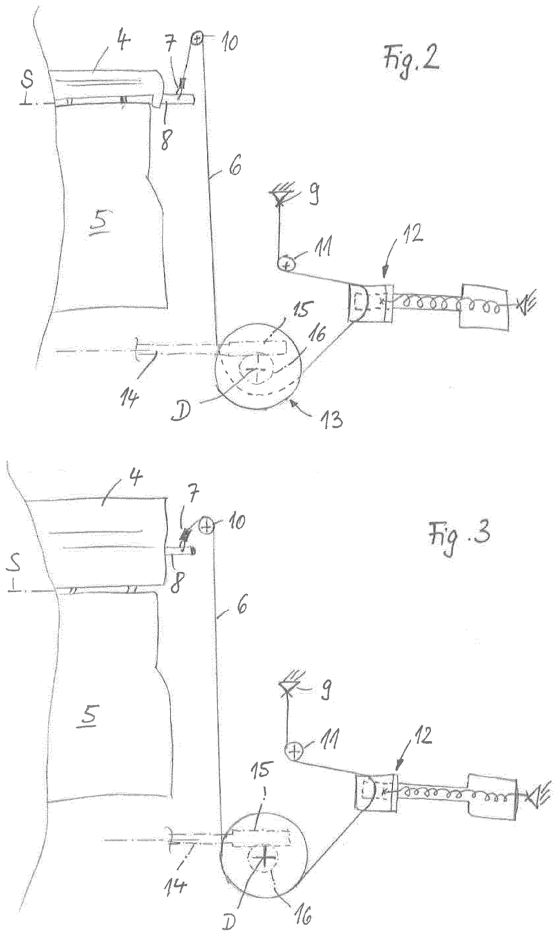

Ein Personenkraftwagen weist eine Seitentür 1 gemäß Fig. 1 auf, die als Fondseitentür ausgebildet ist. Die Seitentür 1 weist oberhalb einer Türbrüstung eine Seitenscheibe 2 auf, die von entsprechenden Türrahmenabschnitten umrandet ist. Türinnenseitig ist der Seitenscheibe 2 eine Beschattungsvorrichtung zugeordnet, die nachfolgend anhand der Fig. 2 bis 5 näher beschrieben wird. Die Beschattungsvorrichtung weist ein flexibles Beschattungsgebilde aus einer textilen Web- oder Maschenware auf. Das Beschattungsgebilde ist auf einer Wickelwelle auf- und abwickelbar gehalten, die in einem Aufnahmebereich eines Kassettengehäuses 5 drehbar gelagert ist. Das Kassettengehäuse 5 ist fahrzeuginnenraumseitig türfest montiert und erstreckt sich im Wesentlichen in Fahrzeuglängsrichtung. Das Beschattungsgebilde weist an seinem in Auszugrichtung vorderen Stirnendbereich ein formstabiles Auszugprofil auf, das in türfesten Führungsschienen 3 entlang der Seitenscheibe 2 im Wesentlichen in Fahrzeughochrichtung parallelverlagerbar ist. Die seitlichen Führungsschienen 3 sind an entsprechenden Türrahmenabschnitten befestigt. Das Auszugprofil ist an seinem gegenüberliegenden Stirnendbereich mit Mitnehmern verbunden, die in den Führungsschienen 3 geführt sind. Eine Verlagerung des Auszugprofils in Fahrzeughochrichtung längs der Führungsschienen 3 nach unten oder nach oben führt zwangsläufig zu einer entsprechenden Verlagerung des Beschattungsgebildes, so dass das Beschattungsgebilde zwischen einer Beschattungsstellung und einer Ruhestellung verlagert werden kann. In der Beschattungsstellung ist das Auszugprofil längs der Führungsschienen 3 bis zu einem oberen Türrahmenabschnitt verlagert und das Beschattungsgebilde überdeckt die Seitenscheibe 2 zumindest weitgehend. In der Ruhestellung sind das Beschattungsgebilde und das Auszugprofil in Fahrzeughochrichtung nach unten verfahren, das Beschattungsgebilde ist auf die Wickelwelle aufgewickelt, und das Auszugprofil ist in dem Aufnahmebereich des Kassettengehäuses 5 positioniert. Der Aufnahmebereich des Kassettengehäuses 5 ist nach oben offen und bildet einen Durchtritt für das Auszugprofil und das Beschattungsgebilde. Dieser Durchtritt ist durch ein Schließteil 4 in Form einer schwenkbeweglichen Klappe verschließbar oder freigebbar. Das Schließteil 4 ist um eine Schwenkachse S schwenkbeweglich gelagert, die im Wesentlichen in Fahrzeuglängsrichtung erstreckt ist. Das Schließteil 4 erstreckt sich über eine gesamte Länge der Seitenscheibe 2 - in Fahrzeuglängsrichtung gesehen - und schließt in einer Schließstellung zumindest weitgehend bündig mit der Türbrüstung der Seitentür 1 ab. Das Schließteil 4 ist aus dieser Schließstellung in eine Öffnungsstellung überführbar, in der der Durchtritt vollständig freigegeben wird, damit das Auszugprofil und das Beschattungsgebilde aus der Ruhestellung in die Beschattungsstellung verfahren werden können. Zur Verlagerung des Auszugprofils und des Beschattungsgebildes zwischen der Ruhestellung und der Beschattungsstellung ist ein Antriebssystem vorgesehen, das einen elektrischen Antriebsmotor aufweist.

Das Antriebssystem weist zwei Gewindesteigungskabel auf, die jeweils in einer der beiden Führungsschienen 3 verlegt sind und mit jeweils einem Mitnehmer verbunden sind, der dem jeweiligen Stirnendbereich des Auszugprofils zugeordnet ist. Die beiden flexiblen Gewindesteigungskabel können bei einer anderen Ausführungsform der Erfindung durch flexible Zahnstangen ersetzt sein. Die Antriebsübertragungsstränge in Form der Gewindesteigungskabel werden über eine Synchronwelle synchron zueinander angetrieben, die koaxial oder achsparallel zu einer Drehachse der Wickelwelle ausgerichtet ist. Die Synchronwelle trägt drehfest zwei Zahnräder, die jeweils einem der beiden Antriebsübertragungsstränge, vorliegend der Gewindesteigungskabel, zugeordnet sind. Die Synchronwelle wird über ein Zahnradgetriebe angetrieben von einer flexiblen Antriebswelle, die mit der Motorwelle des elektrischen Antriebsmotors gekoppelt ist. Auch der Wickelwelle selbst ist ein Zahnrad drehfest zugeordnet, das durch das Zahnradgetriebe des Antriebssystems antreibbar ist. Damit treibt das Antriebssystem sowohl die Wickelwelle als auch die Gewindesteigungskabel für das Auszugprofil an. Um eine permanente und gleichmäßige Straffung des flexiblen Beschattungsgebildes in einer zumindest teilweise ausgezogenen Funktionsstellung zu bewirken, ist zwischen das Zahnrad zum Antreiben der Wickelwelle und die Wickelwelle eine Federvorspannungseinheit zwischengeschaltet, die die Wickelwelle unter Federvorspannung in Aufwickelrichtung hält und dennoch gemeinsam mit der Wickelwelle über das Antriebsrad gedreht werden kann.

Eine Öffnungs- oder Schließbewegung des Schließteils 4 ist aus einem Antrieb des Antriebssystems abgeleitet, um eine Öffnungs- oder Schließbewegung von einer entsprechenden Verlagerung des Auszugprofils und des Beschattungsgebildes abhängig zu machen. Hierzu weist das Antriebssystem eine Übertragungswelle 14 auf (Fig. 2 und 3), die koaxial oder achsparallel zu der Synchronwelle ausgerichtet und drehfest mit der Synchronwelle verbunden ist. Zwischen der Synchronwelle und der Übertragungswelle 14 kann alternativ ein Über- oder Untersetzungsgetriebe vorgesehen sein. Dieses Getriebe ist zweckmäßig, um einen relativ langen Verfahrweg für das Auszugprofil zwischen der Ruhestellung und der Beschattungsstellung kompatibel zu einem relativ kurzen Schwenkweg des Schließteils 4 zwischen der Öffnungsstellung und der Schließstellung zu machen.

Die Übertragungswelle 14 treibt mittels eines Schneckentriebs 15, 16 eine Seilsteuerrolle 13 einer Seilzuganordnung an, die nachfolgend näher beschrieben wird. Der Schneckentrieb weist eine zur Übertragungswelle 14 koaxiale und fest mit der Übertragungswelle 14 verbundene Schneckenwelle 15 auf, die mit einem Schneckenrad 16 kämmt, das koaxial zu einer Drehachse D der Seilsteuerrolle 13 ausgerichtet ist und drehfest mit der Seilsteuerrolle 13 verbunden ist. Das Schneckenrad 16 kann einstückig an der Seilsteuerrolle 13 angeformt sein oder separat hergestellt und anschließend drehfest mit der Seilsteuerrolle 13 verbunden sein. Die Seilsteuerrolle 13 bildet ein Umlenkelement für ein offenes Seil 6 der Seilzuganordnung. Die Seilsteuerrolle 13 ist in Abstand unterhalb des Schließteils 4 seitlich neben dem Kassettengehäuse 5 positioniert. Auch das Seil 6 der Seilzuganordnung erstreckt sich seitlich neben dem Schließteil 4 und dem Kassettengehäuse 5. Das Seil 6 weist ein oberes Seilende 17 auf, das fest mit einem Hebelfortsatz 8 des Schließteils 4 verbunden ist, der achsparallel, aber radial beabstandet zu der Schwenkachse S von einem Seitenrandbereich des Schließteils 4 nach außen abragt. Der Hebelfortsatz 8 ist fest mit dem Schließteil 4 verbunden. Das Seilende 7 bildet im Bereich des Hebelfortsatzes 8 eine Schlaufe, um eine fixe Verbindung zwischen dem Hebelfortsatz 8 und damit dem Schließteil 4 und dem Seilende 7 zu erzielen. Das Seil 6 ist ausgehend von dem Seilende 7 nach oben und über eine Umlenkrolle 10 nach unten geführt. Das Seil 6 ist im Wesentlichen in Fahrzeughochrichtung nach unten geführt zu der Seilsteuerrolle 13, auf der das Seil 6 an jeweils einer exzentrischen Seilumlenkspur 13a, 13b, 13c um einen Winkel zwischen 90° und 180° umgelenkt ist. Nach der Seilsteuerrolle 13 ist das Seil 6 über eine Seilausgleichseinheit 12 umgelenkt sowie über eine weitere Umlenkrolle 11 zu einem türfesten Anlenkpunkt 9 geführt, an dem das zu dem Seilende 7 gegenüberliegende Seilende befestigt ist. Die Seilausgleichseinheit 12 bildet ein Umlenkelement, das quer zur Seilführung federelastisch nachgiebig beweglich ist. Hierdurch ist zum einen eine gleichmäßige Seilspannung des Seils 6 erzielbar. Zum anderen erfolgt durch das Seilausgleichselement 12 ein Seillängenausgleich abhängig davon, um welche der drei Seilumlenkspuren 13a, 13b, 13c das Seil 6 im Bereich der Seilsteuerrolle umgelenkt ist. Die Seilsteuerrolle 13 ist um die Drehachse D drehbar gelagert und wird über den Schneckentrieb 15, 16 und die Übertragungswelle 14 durch Ableitung der Antriebskraft des elektrischen Antriebsmotors angetrieben. Die beiden Umlenkrollen 10 und 11 sind türfest, aber drehbar angeordnet. Die Seilumlenkspuren 13a, 13b, 13c bilden unterschiedliche Öffnungs- und Schließstellungen des Schließteils 4 ab. Das Seil 6 ist im Bereich der jeweiligen Seilumlenkspur 13a, 13b, 13c jeweils lediglich über einen Winkel von weniger als 180° um die Seilsteuerrolle 13 umgelenkt. Je nachdem, in welcher Seilumlenkspur 13a, 13b, 13c das Seil 6 umgelenkt ist, ergibt sich ein längerer oder ein kürzerer Seilweg um die Seilsteuerrolle 13 herum. Hierdurch verändert sich die freie Seillänge des Seils 6 zwischen der stationären Umlenkrolle 10 und der Seilsteuerrolle 13, wodurch zwangsläufig der Hebelfortsatz 8 nachgeführt werden muss. Dies führt zwangsgesteuert zu einer entsprechenden Öffnungs- oder Schließbewegung des Schließteils 4.

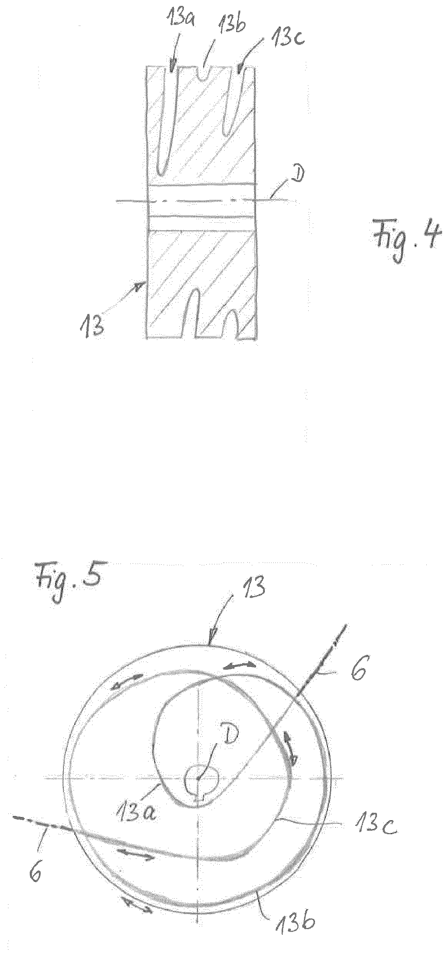

Anhand der Fig. 4 ist erkennbar, dass die drei Seilumlenkspuren 13a, 13b, 13c wendelförmig vom Außenumfang der Seilsteuerrolle 13 fluchtend ineinander übergehen. Die wendelförmige Abwicklung der in Umfangsrichtung aneinanderschließenden Seilumlenkspuren 13a, 13b, 13c ist anhand der Fig. 5 verdeutlicht. Das angedeutete Seil 6 ist aber nicht, wie anhand der Fig. 5 zu vermuten wäre, um alle Seilumlenkspuren 13a bis 13c herumgeschlungen. Vielmehr ist das Seil 6 jeweils lediglich in einer der drei Seilumlenkspuren 13a, 13b, 13c geführt. Durch eine entsprechende Drehung der Seilsteuerrolle 13 verlagert sich das umgelenkte Seiltrum des Seils 6 in die jeweils wendelförmig anschließende Seilumlenkspur, wodurch sich die verbleibende Seiltrumlänge zwischen dem Seilende 7 und der Seilsteuerrolle 13 zwangsläufig verändert. Die Seilumlenkspuren 13a, 13b, 13c weisen jeweils unterschiedliche radiale Abstände zu der Drehachse D auf, wodurch sich in der jeweiligen Seilumlenkspur ein längerer oder ein kürzerer Seilumlenkweg für das Seil 6 ergibt. Dieser führt zu der sich ändernden Seiltrumlänge zwischen dem Seilende 7 und dem Einlaufen des Seils 6 in die Seilsteuerrolle 13 und demzufolge zu einer gewünschten Verschwenkung des Schließteils 4. Anhand der Fig. 4 ist erkennbar, dass die Seilumlenkspuren 13a, 13b, 13c nutförmig von außen her in den Außenumfang der Seilsteuerrolle 13 eingebracht sind, wobei die Seilumlenkspuren 13a, 13b, 13c über den Umfang der Seilsteuerrolle 13 gesehen wendelförmig fluchtend ineinander übergehen. Für die Seilumlenkspur 13a ergibt sich ein tiefer nutförmiger Schlitz, für die Seilumlenkung 13b ein sehr flacher Nutschlitz und für die Seilumlenkspur 13c ein mittlerer Nutschlitz. Das umgelenkte Seiltrum des Seils 6 dringt jeweils immer bis zum Grund des nutförmigen Schlitzes der jeweiligen Seilumlenkspur 13a, 13b, 13c ein, da das Seil 6 über die Seilausgleichseinheit 12 permanent unter Zugspannung gehalten ist.

In Funktion der Seilzuganordnung 6 ist das Seil 6 demzufolge bei in seiner Schließstellung befindlichem Schließteil in der Seilumlenkspur 13a verlegt, in der die Seiltrumlänge des Seils 6 zur Umlenkrolle 10 und zum Seilende 7 hin am größten ist. Wenn nun das Auszugprofil und das Beschattungsgebilde aus der Ruhestellung herausbewegt werden, wird die Seilsteuerrolle 13 gedreht, wodurch das umgelenkte Seiltrum des Seils 6 in die anschließende Seilumlenkspur 13b gleitet. Diese ist flach gestaltet, wodurch ein radialer Abstand zur Drehachse D gegenüber der Seilumlenkspur 13a vergrößert ist, so dass das umgelenkte Seiltrum eine größere Länge aufweist, die zwangsläufig zu einer reduzierten Seiltrumlänge zwischen Seiltrumrolle und Schließteil und zum Öffnen des Schließteils 4 bis in die vollständige Öffnungsstellung führt. Sobald das Auszugprofil und das Beschattungsgebilde ihre Beschattungsstellung erreicht haben, gleitet das umgelenkte Seiltrum aufgrund der Drehbewegung der Seilsteuerrolle 13 zwangsläufig in die Seilumlenkspur 13c mit reduziertem radialem Abstand zur Drehachse D, wodurch das Schließteil 4 wieder teilweise geschlossen wird und in eine Zwischenstellung überführt wird. In dieser Zwischenstellung ist das Schließteil 4 an das ausgezogene Beschattungsgebilde angeschmiegt und ist demzufolge wieder in Richtung der Schließstellung zurückgeführt. Die teilweise Öffnungsstellung, die der Zwischenstellung entspricht, liegt zwischen der Schließstellung und der Öffnungsstellung des Schließteils 4. Anhand der Fig. 5 ist erkennbar, dass ausgehend von dem in der Zeichnungsebene von rechts oben kommenden Seil 6 das Seil 6 im Bereich der Seilumlenkspur 13a relativ nahe an der Drehachse D umgelenkt ist, wodurch die vollkommene Schließstellung des Schließteils 4 definiert ist. Folgt man dieser Linie in Fig. 5 im Uhrzeigersinn, erkennt man, dass die Seilumlenkspur 13a gegenüber der Drehachse D in Umfangsrichtung weiter radial nach außen führt bis nahe an den Rand des Außenumfangs der Seilsteuerrolle 13 in die Seilumlenkspur 13b. Die Seilumlenkspur 13b verbleibt über nahezu eine vollständige Umdrehung der Seilsteuerrolle 13 in diesem etwa maximalen Abstand zur Drehachse D. Über diesen Weg und in diesem Zeitraum wird das Auszugprofil nach oben bis zur Beschattungsstellung verlagert. Am Übergang der Seilumlenkspur 13b (in Fig. 5 weiter der Linie im Uhrzeigersinn folgend) geht die Linie in die Seilumlenkspur 13c über, die einen reduzierten radialen Abstand zur Drehachse D über einen Kreisbogenbereich bildet. In diesem Bereich wird das Schließteil 4 wieder zurückgeführt in Schließrichtung bis in die Zwischenstellung. Nach Erreichen der Zwischenstellung kann das Antriebssystem abgeschaltet werden. Wenn das Beschattungsgebilde und das Auszugprofil aus der Beschattungsstellung wieder in die Ruhestellung überführt werden sollen, wird die Seilsteuerrolle 13 über den Schneckentrieb 15, 16 und die Übertragungswelle 14 in entsprechend umgekehrter Richtung angetrieben, wodurch das Schließteil 4 aus der Zwischenstellung wieder in die vollständige Öffnungsstellung überführt wird, bis das Auszugprofil in den Durchtritt des Kassettengehäuses 5 eingefahren ist. Dann wird das Schließteil 4 zwangsläufig in seine Schließstellung überführt. Das Gleiten des umgelenkten Seiltrums erfolgt bei einer Rückführung des Beschattungsgebildes und des Auszugprofils gemäß der Darstellung nach Fig. 5 entsprechend umgekehrt im Gegenuhrzeigersinn.

## Patentansprüche

1. Beschattungsvorrichtung für eine Scheibe (2) eines Kraftfahrzeugs mit einem flexiblen Beschattungsgebilde, das auf einer Wickelwelle auf- und abwickelbar gehalten ist, die in einem fahrzeugfesten Aufnahmebereich mit einem Durchtritt angeordnet ist, durch den hindurch das Beschattungsgebilde zwischen einer auf die Wickelwelle aufgewickelten Ruhestellung und einer die Scheibe (2) überdeckenden Beschattungsstellung verlagerbar ist, wobei der Durchtritt durch ein schwenkbeweglich gelagertes Schließteil (4) verschließbar oder freigebbar ist, sowie mit einem Antriebssystem, das zur Verlagerung des Beschattungsgebildes zwischen der Ruhestellung und der Beschattungsstellung vorgesehen ist, und mit einer Steuerkinematik zur Zwangssteuerung einer Öffnungs- oder Schließbewegung des Schließteils (4), die mit dem Antriebssystem gekoppelt ist, **dadurch gekennzeichnet, dass** die Steuerkinematik eine Seilzuganordnung aufweist, die mit einer Seilsteuerrolle (13) mit wenigstens einer zu einer Drehachse (D) der Seilsteuerrolle (13) exzentrischen Seilumlenkspur (13a, 13b, 13c) versehen ist.

2. Beschattungsvorrichtung nach Anspruch 1, **dadurch gekennzeichnet, dass** die Seilsteuerrolle (13) ein- oder mehrteilig ausgebildet ist.

3. Beschattungsvorrichtung nach Anspruch 1 oder 2, **dadurch gekennzeichnet, dass** mehrere exzentrische Seilumlenkspuren (13a, 13b, 13c) vorgesehen sind, die in Umfangsrichtung der Seilsteuerrolle (13) zueinander versetzt angeordnet sind, und die unterschiedliche radiale Abstände relativ zu der Drehachse (D) der Seilsteuerrolle (13) aufweisen.

4. Beschattungsvorrichtung nach Anspruch 3, **dadurch gekennzeichnet, dass** die unterschiedlichen Seilumlenkspuren (13a, 13b, 13c) wendelförmig über einen Umfang der Seilsteuerrolle (13) verteilt angeordnet sind und fluchtend ineinander übergehen.

5. Beschattungsvorrichtung nach Anspruch 1, **dadurch gekennzeichnet, dass** die Seilzuganordnung eine Seilausgleichseinheit (12) aufweist.

6. Beschattungsvorrichtung nach einem der vorhergehenden Ansprüche, **dadurch gekennzeichnet, dass** die Seilsteuerrolle (13) durch ein Antriebsglied (14) des Antriebssystems angetrieben ist.

7. Beschattungsvorrichtung nach einem der vorhergehenden Ansprüche, **dadurch gekennzeichnet, dass** die Seilzuganordnung seitlich zu dem Schließteil (4) angeordnet ist und an einem Seitenbereich des Schließteils (4) angreift.

## Claims

1. Shading device for a window pane (2) of an automotive vehicle, comprising a flexible shading structure which is held on a winding shaft to be wound up and wound off, which shaft is disposed in a vehicle-fixed accommodating region with a passage, through and across which passage the shading structure is displaceable between a rest position wound up on the winding shaft and a shading position covering the window pane (2), wherein the passage is capable of being closed or exposed by means of a pivotably mounted closing part (4), and comprising a drive system provided for displacing the shading structure between the rest position and the shading position, and comprising control kinematics, coupled to the drive system, for forced control of an opening or closing movement of the closing part (4), **characterized in that** the control kinematics include a cable pull arrangement which is provided with a cable control pulley (13) having at least one cable deflection track (13a, 13b, 13c) eccentric in relation to a rotational axis (D) of the cable control pulley (13).

2. Shading device according to claim 1, **characterized in that** the cable control pulley (13) is a one-piece or multi-piece device.

3. Shading device according to claim 1 or 2, **characterized in that** a plurality of eccentric cable deflection tracks (13a, 13b, 13c) are provided and disposed offset in relation to each other in the circumferential direction of the cable control pulley (13) and have different radial spacings relative to the rotational axis (D) of the cable control pulley (13).

4. Shading device according to claim 3, **characterized in that** the different cable deflection tracks (13a, 13b, 13c) are arranged helically distributed over a circumference of the cable control pulley (13) and merge in true alignment.

5. Shading device according to claim 1, **characterized in that** the cable pull arrangement includes a cable adjustment unit (12).

6. Shading device according to any of the preceding claims, **characterized in that** the cable control pulley (13) is driven by a drive member (14) of the drive system.

7. Shading device according to any of the preceding claims, **characterized in that** the cable pull arrangement is disposed laterally of the closing part (4) and engages on a side area of the closing part (4).

## Revendications

1. Dispositif d'ombrage pour une vitre (2) d'un véhicule automobile avec une structure d'ombrage flexible, la structure tenue sur un arbre enrouleur de manière enroulable et déroulable, l'arbre disposé dans une zone de logement fixée au véhicule avec un passage, à travers duquel la structure d'ombrage est déplaçable entre une position de repos enroulée sur l'arbre enrouleur et une position d'ombrage recouvrant la vitre (2), dans lequel le passage est refermable ou découvrable par une partie de fermeture (4) montée de manière pivotante, ainsi qu'avec un système de transmission prévu pour le déplacement de la structure d'ombrage entre la position de repos et la position d'ombrage, et avec une cinématique de commande couplée au système de transmission pour la commande forcée d'un mouvement d'ouverture ou de fermeture de la partie de fermeture (4),
**caractérisé en ce que**
la cinématique de commande comporte un arrangement de commande par câble muni d'une poulie de câble de commande (13) présentant au moins une voie de déflexion de câble (13a, 13b, 13c) excentrique par rapport à un axe de rotation (D) de la poulie de câble de commande (13).

2. Dispositif d'ombrage selon la revendication 1, **caractérisé en ce que** la poulie de câble de commande (13) est configurée sous forme d'une partie ou de plusieurs parties.

3. Dispositif d'ombrage selon la revendication 1 ou 2, **caractérisé en ce que** plusieurs voies de déflexion de câble (13a, 13b, 13c) excentriques sont prévues, disposées décalées l'une par rapport à l'autre dans la direction circonférentielle de la poulie de câble de commande (13), et présentent des distances radiales différentes par rapport à l'axe de rotation (D) de la poulie de câble de commande (13).

4. Dispositif d'ombrage selon la revendication 3, **caractérisé en ce que** les voies de déflexion de câble (13a, 13b, 13c) différentes sont disposées en spirale distribuées autour d'une circonférence de la poulie de câble de commande (13) et convergent en alignement.

5. Dispositif d'ombrage selon la revendication 1, **caractérisé en ce que** l'arrangement de commande par câble comporte une unité de régulation de câble (12).

6. Dispositif d'ombrage selon l'une quelconque des revendications précédentes, **caractérisé en ce que** la poulie de câble de commande (13) est actionnée par le biais d'un élément d'entraînement (14) du système de transmission.

7. Dispositif d'ombrage selon l'une quelconque des revendications précédentes, **caractérisé en ce que** l'arrangement de commande par câble est disposé latéralement par rapport à la partie de fermeture (4) et s'applique sur une portion latérale de la partie de fermeture (4).
